# EUROPEAN PATENT APPLICATION

(11) **EP 2 985 165 A1**
(43) Date of publication of application: **17.02.2016**
(21) Application number: 14782415.5
(22) Date of filing: 28.03.2014
(51) Int. Cl.: B60K 7/00, B60K 17/14, F16D 3/18

(54) **IN-WHEEL MOTOR UNIT FOR VEHICLES**

(30) Priority: 11.04.2013 JP 2013082666
(71) Applicant: Nissan Motor Co., Ltd., Yokohama-shi, Kanagawa 221-0023 (JP)
(72) Inventor: ABE, Manabu, Atsugi-shi Kanagawa 243-0123 (JP); CHIBA, Ryo, Atsugi-shi Kanagawa 243-0123 (JP); SENOO, Takashi, Atsugi-shi Kanagawa 243-0123 (JP); ASOGAWA, Katsunori, Atsugi-shi Kanagawa 243-0123 (JP)
(74) Representative: Hoefer & Partner Patentanwälte mbB
(86) International application number: PCT/JP2014/059250
(87) International publication number: WO 2014/168031

(57) **Abstract**

An in-wheel motor unit for a vehicle, in which a drive output shaft 10 of a drive unit body A and a wheel hub shaft 70 supported by a hub bearing 71 with respect to an axle case 72 as case member of the drive unit body A are connected via a displacement absorption mechanism B. The displacement absorption mechanism B comprises an output shaft side drive transmission fitting portion 58 which allows to mesh a first inner tooth portion 56 of the drive output shaft 10 and a first outer tooth portion 52 of a gear coupling shaft 50, and a hub shaft side drive transmission fitting portion 59 which allows to mesh a second inner tooth portion 57 of the wheel hub shaft 70 with a second outer tooth portion 54 of the gear coupling shaft 50, wherein the second outer tooth portion 54 of the gear coupling shaft 50 of the displacement absorption mechanism B is arranged axially in the vehicle exterior side with respect to a wheel mounting surface 70g on which a tire wheel 110 is mounted to the wheel hub.

## Description

### TECHNICAL FIELD

The present invention relates to an in-wheel motor unit for a vehicle in which a drive output shaft of the drive unit body and a wheel hub shaft supported by the hub bearing with respect to a case member are linked or connected via a displacement absorption mechanism.

Conventionally, an in-wheel motor for a vehicle is known in which a drive output shaft and a wheel hub shaft supported by a hub bearing is connected via a displacement absorption mechanism. The displacement absorption mechanism is intended to prevent or suppress the displacement / inclination of the hub bearing from being transmitted to a gear train or an electric motor accommodated in the drive unit to thereby prevent or suppress the impact on a gear meshing portion or the motor (for example, see Patent Document 1). In the technique described in Patent Document 1, a hub is provided at the distal end of a shaft portion extending to the wheel side from the displacement absorbing mechanism. A wheel is structured to be fixed or mounted via bolts on a mounting surface of the hub.

### PRIOR ART REFERENCE

Patent Document 1: JP 2009-190440 A

### SUMMARY OF THE INVENTION

### PROBLEM TO BE SOLVED BY THE INVENTION

However, in the conventional technique described above, the total length in the axial direction of the displacement absorbing mechanism is disposed on the interior side of the vehicle with respect to the wheel mounting surface. Therefore, with respect to the position of the wheel, the drive unit body is shifted toward the interior side by the entire length in the axial direction of the displacement absorbing mechanism, which could deteriorate vehicle mountability. Further, when the drive unit body is placed forcibly in the vehicle outer side, the axial span of the displacement absorption mechanism is shortened so that there is a possibility that the displacement absorbing performance is consequently lowered.

The present invention has been made in consideration of the above problems, and an object thereof is to provide an in-wheel motor unit for a vehicle, which makes it possible to achieve both the ensuring of the vehicle mountability and the displacement absorbing performance.

To achieve the above object, the present invention comprises a drive output shaft of a drive unit body, a wheel hub shaft supported on a hub bearing, a displacement absorption mechanism configured to link the drive output shaft and the wheel hub shaft, an output shaft side drive transmission engaging or fitting portion meshed with a first inner tooth portion of the drive output shaft and a first outer tooth portion of a gear coupling shaft, and a hub shaft side drive transmission engaging or fitting portion meshed with a second inner tooth portion of the wheel hub shaft and a second outer tooth portion of the gear coupling shaft, wherein the second outer tooth portion of the gear coupling shaft of the displacement absorption mechanism is configured to be disposed axially in the vehicle outer side with respect to a wheel mounting surface of the wheel hub shaft, on which a wheel is attached or mounted.

### EFFECT OF THE INVENTION

In the in-wheel motor unit for a vehicle according to the present invention, the second outer tooth portion of the gear coupling shaft of the displacement absorption mechanism is configured to be disposed axially in the vehicle outer or exterior side with respect to a wheel mounting surface of the wheel hub shaft. Thus, the drive unit body may be placed in the vehicle outer side to suppress the axial dimension of the entire unit to thereby achieve excellent automotive layout properties. Additionally, the axial span of the displacement absorption mechanism can be secured longer, so that it is possible to obtain a higher displacement absorption performance compared to the displacement absorption mechanism of shorter span.

### BRIEF DESCRIPTION OF THE DRAWINGS

FIG. 1 is a cross-sectional view showing the overall cross-section of an in-wheel motor unit for a vehicle in a first embodiment;
FIG. 2 is an exploded sectional view showing a configuration of the in-wheel motor unit for a vehicle in which a drive unit body, a displacement absorbing mechanism, and a wheel structure in the first embodiment are separated from each other;
FIG. 3 is an enlarged sectional view showing enlargement of the displacement absorption mechanism and its periphery of the in-wheel motor unit for a vehicle according to the first embodiment;
FIG. 4A is an operation explanatory view showing a displacement absorption effect for absorbing the displacement / inclination of the hub bearing by the displacement absorption mechanism in a state without displacement;
FIG. 4B is an operation explanatory view showing a displacement absorption effect for absorbing the displacement / inclination of the hub bearing by the displacement absorption mechanism in a state of parallel displacement;
FIG. 4C is an operation explanatory view showing a displacement absorption effect for absorbing the displacement / inclination of the hub bearing by the displacement absorption mechanism in an inclined state;
FIG. 4D is an operation explanatory view showing a displacement absorption effect for absorbing the displacement / inclination of the hub bearing by the displacement absorption mechanism in a state with axial displacement;
FIG. 5 is an enlarged sectional view showing details of the structure of an axle case and the wheel hub shaft in the first embodiment;
FIG. 6 is a front view seen from the axial direction showing a mudguard mounted on the axle case in the in-wheel motor unit for the vehicle in the first embodiment;
FIG. 7 is a perspective view showing the axle case and the wheel hub shaft of the in-wheel motor unit in the first embodiment; and
FIG. 8 is an explanatory view showing a movement trajectory of a wheel bolt when detaching the wheel bolt in the in-wheel motor unit for a vehicle in the first embodiment.

### EMBODIMENTS FOR IMPLEMENTING THE INVENTION

Hereinafter, a description is given of the best configuration for implementing an in-wheel motor unit for a vehicle according to the present invention based on a first embodiment shown in the drawings.

### First, a description is made of the configuration.

More specifically, the configuration of the vehicle in-wheel motor unit in the first embodiment is described separately in [schematic configuration of the entire unit], [detailed configuration of the drive unit body], [detailed configuration of displacement absorption mechanism], [detailed configuration of wheel structure], [detailed configuration of assembly structure of gear coupling axis], and [detailed configuration of the periphery of axle case], respectively.

### [Schematic configuration of the entire unit]

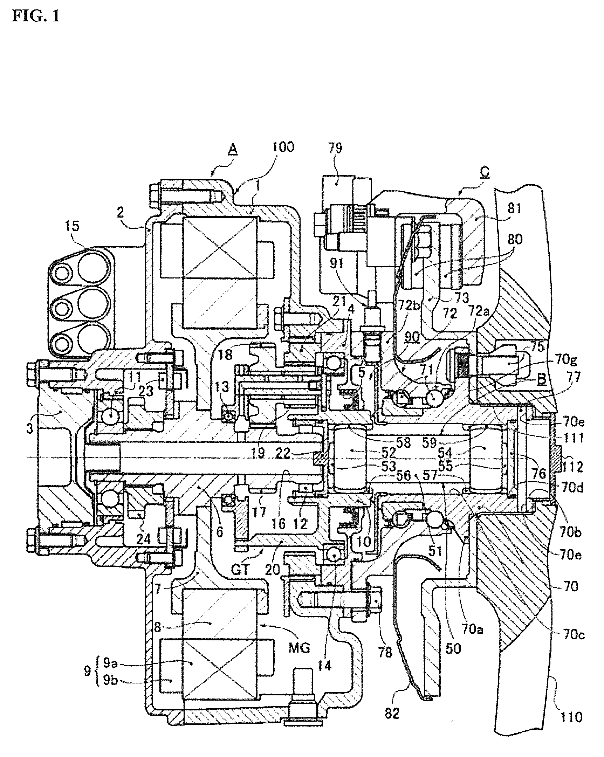

With reference to FIG. 1 showing an overall cross-section of the in-wheel motor unit for a vehicle, a description will be given of a schematic structure of the entire unit.
The in-wheel motor unit for the vehicle is applied to the left and right rear wheels and the like of an electric vehicle. As shown in FIG. 1, a drive unit body A, a displacement absorption unit B, and a wheel structure C are provided.

The driving unit body A has a function as a driving source that is installed to each of the left and right rear wheels, and is provided with a motor generator MG and a gear train GT. During power running of the motor-generator MG, by applying to a stator coil 9b which is wound around a stator 9 a three-phase alternating current, a motor shaft 6 integral with the rotor is rotated. The rotation speed of the motor shaft 6 is output to the drive shaft 10 with its speed reduced by a gear train GT. During regeneration by the motor-generator MG, the rotation speed input from the drive output shaft 10 is accelerated by the gear train GT to rotate the motor shaft 6 and the rotor 8. Thus, three-phase alternating current is generated in the stator coil 9b of the stator 9, which is disposed over the rotor 8 with air gap.

The displacement absorption mechanism B has a function to prevent / inhibit to transfer displacement / inclination of the hub bearing 71 to the motor-generator MG and gear train GT of the drive unit body A, and is provided with a gear coupling shaft 50. The gear coupling shaft 50 connects or links The drive output shaft 10 of the drive unit body A and a wheel hub shaft 70 which is supported on a hub bearing 71 with respect to an axle case 72 (case member) are linked or connected by the gear coupling shaft in such a way that the displacement or inclination may be absorbed.

The wheel structure C has a function of mounting a tire and a brake mechanism of an associated wheel, and is provided with a wheel hub axle 70. The wheel hub shaft 70, with respect to the axle case 72, is rotatably supported by a hub bearing 71 of the double row angular contact bearing structure. On a hub-side flange part 70a of the wheel hub shaft 70, a brake disk 73 and the tire wheel 110 are mounted or fixed. Furthermore, the wheel hub shaft 70 is connected to the drive output shaft 10 of the drive unit body A via the displacement absorption mechanism B.

### [Detailed configuration of the drive unit body]

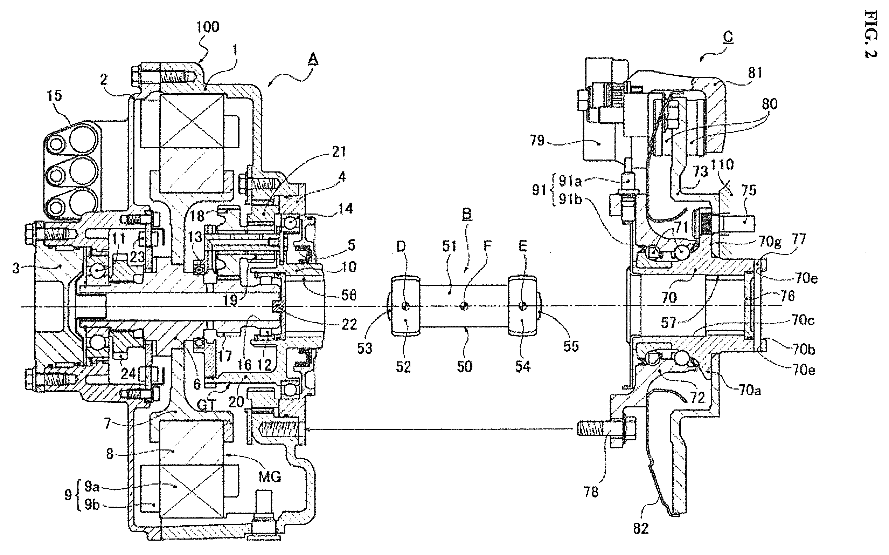

FIG. 2 shows a configuration of the in-wheel motor unit for a vehicle in which a drive unit body A, a displacement absorbing mechanism B, and a wheel structure C are illustrated separately or divided from each other. Below, with reference to FIGS. 1 and 2, a description is given of the detailed configuration of the drive unit body A.

The drive unit body A is configured to accommodate, within the unit case member 100, a motor-generator MG with the embedded magnet synchronous motor structure of three-phase alternating current type, and a gear train GT with a planetary gear type reduction gear mechanism.

The unit case member 100 is configured to include a unit case 1, a unit cover 2, a motor shaft side cover 3, and an output shaft side cover 4. The unit cover 2 is bolted to one end of the unit case 1, and the motor shaft side cover 3 is bolted to the unit cover 2 so as to close that one end of the motor shaft 6. The output shaft side cover 4 is bolted to the other end of the unit case 1 so as to allow part of the drive output shaft 10 to project from the drive unit body A. In addition, an oil seal 5 is mounted on an end position of the output shaft side cover 4, and the portion of the oil seal 5 is made in contact with the outer circumferential surface of the drive output shaft 10 at a predetermined sealing pressure for sealing. That is, the output shaft-side cover 4 and the oil seal 5 serve as a partition structure member for separating the drive unit body A and the hub bearing 71.

The motor generator MG is configured to include the motor shaft 6, a rotor flange 7, the rotor 8, and the stator 9. The motor shaft 6 is rotatably supported at its one end through a first bearing 11 relative to the unit cover 2, and is supported at its other end relatively rotatably via a second bearing 12 against the drive output shaft 10. The rotor 8 is fitted to the rotor flange 7 which in turn is fixed to the motor shaft 6 and is constituted by laminated steel plates with permanent magnet embedded (not shown). The stator 9 is fixed to the inner surface of the unit case 1, and is arranged with an air gap with respect to the rotor 8. The stator 9 is constructed by winding the stator coil 9b to each of the stator teeth 9a composed of laminated punched steel sheets. Note that the stator coil 9b is connected with wiring harness via connection terminals 15 which is divided into U-, V-, and W- phase. Also, the motor shaft 6 is formed with an axis oil path 16 for lubricating oil for lubricating required sites such as the gear meshing portion of the gear train GT and bearings, etc.

The gear train GT is disposed on the right side space of the rotor flange 7 in FIG. 1, and includes a sun gear 17, a large pinion 18, a small pinion 19, a pinion carrier 20, and a ring gear 21. In addition, a planetary gear type reduction gear mechanism to reduce an input speed to a slower output speed is constituted by assigning the sun gear for input, the pinion carrier for output, while fixing the ring gear. The sun gear 17 is formed integrally with the motor shaft 6, meshing with the large pinion 18. The large pinion 18 and the small pinion 19 are positioned adjacent to each other and formed integrally and are rotatably supported with respect to the pinion carrier 20. The ring gear 21 is coupled to the unit case 1 through serration so as to be fixed to the rotating direction. The ring gear meshes with the small pinion 19.

The drive output shaft 10 is provided integrally with the pinion carrier 20. The drive output shaft 10 is formed in a cylindrical sleeve shape, one end of which extends axially to the inside of the small pinion 19 while the other end of which extends in the axial direction to the other end so as to protrude from the output shaft side cover 4. This rotation support structure of the drive output shaft 10 is intended for the pinion carrier 20 as well so as to be rotatably supported by a third bearing 13 with respect to the motor shaft 6 and to be rotatably supported by a fourth bearing 14 with respect to the output shaft side cover 4.

Further, a septum or partition seal member 22 is arranged in an oil-tight state in the inner surface of the drive output shaft 10 at a position separating the motor shaft 6 and the gear coupling shaft 50. In other words, the partition seal member 22 is intended to act as a partition wall structure member to isolate the drive unit body A from the displacement absorption mechanism B.
Note that, on the left side space in FIG. 1, a resolver 23 for detecting the rotation angle of the motor and a parking gear 24 for fixing the motor shaft 6 through engagement with a parking pawl (not shown) are arranged.

### [Detailed configuration of the displacement absorption mechanism]

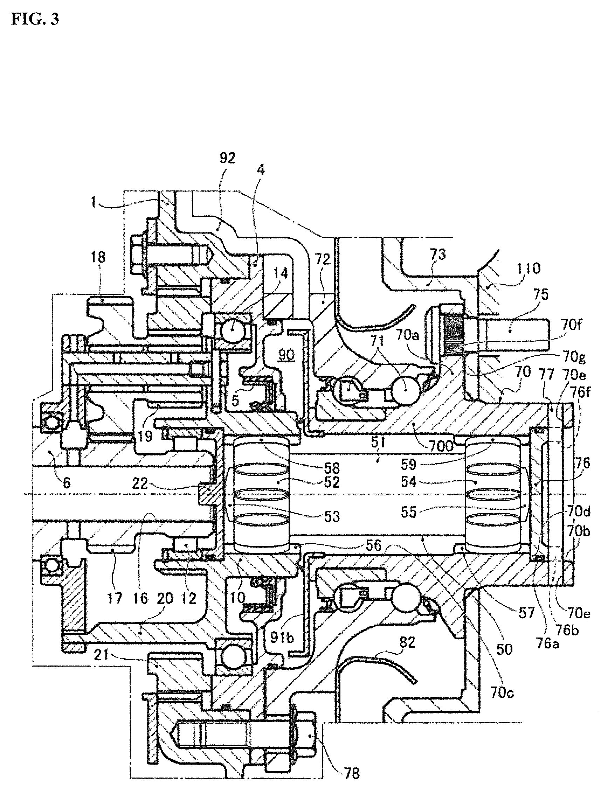

FIG. 2 shows a configuration of the in-wheel motor unit for a vehicle in which a drive unit body A, a displacement absorbing mechanism B, and a wheel structure C are separated or divided from each other. FIG. 3 is an enlarged sectional view showing enlargement of the displacement absorption mechanism that represents the essential constituent. Below, with reference to FIGS. 1 to 3, a detailed description is given of the structure of the displacement absorption mechanism B.

The displacement absorption mechanism B shown in FIG. 1 is configured such that the gear coupling shaft 50 that is replaceable per se or independently may be fitted or engaged with the drive output shaft 10 and the wheel hub shaft 70 for drivable transmission while absorbing displacement.

The gear coupling shaft 50 is structured such that a first outer teeth portion 52 and a first end portion 53 are provided on one end of the gear coupling shaft portion 51 while a second outer teeth portion 54 and a second end portion 55 are provided on the other end of the gear coupling shaft portion 51. The first outer teeth portion 52 is serration-fitted to the first inner teeth portion 56 of the drive output shaft 10 so as to be capable of absorbing displacement. The first end portion 53 is structured to be capable of contacting with the partition seal member 22 via a spherical surface. The second outer teeth portion 54 is serration-fitted to the second inner teeth portion 57 of the wheel hub shaft 70 so as to be capable of absorbing displacement. The second end portion 55 is structured to be capable of contacting with the end cap sealing member 96 via spherical surface.

Regarding the first inner tooth portion 56 formed in the drive output shaft 10 as well as the second inner tooth portion 57 formed in the wheel hub shaft 70, the top surface and the bottom surface of the inner teeth extend straight in the axial direction and thus are formed in a cylindrical shape. On the other hand, regarding the first outer tooth portion 52 and the second outer tooth portion 54, the top surface and the bottom surface of the outer teeth are formed in a spherical shape. Further, the first outer tooth portion 52 and the second outer tooth portion 54 are formed in crowning profile or shape in which the tooth thickness is widened in the central portion while the tooth thickness is narrower toward the both ends (see FIG. 3). Such a structure is achieved in which the inclination in any direction with the inclination center D or the inclination center E may be absorbed. The first end 53 and second end 55 are respectively formed in a smooth spherical surface with the axis center position representing the maximum protruding surface, and the inclination about a displacement (stiffness) center point F disposed between the inclination centers is structured to be absorbed. That is, fitting of the first outer teeth portion 52 and the first inner tooth portion 56 represents an output shaft side driving transmission unit 58.Further, fitting between the second outer teeth portion 54 and the second inner tooth portion 57 represents a hub shaft side driving force transmission fitting portion 59 between the gear coupling

Note that the gear coupling shaft 50 is mounted in a coupling space sealed in the entire circumference along with lubricating grease (not shown).

Furthermore, both axial ends of the gear coupling shaft 50 are formed symmetrically. That is, with respect to the first outer tooth portion 52 and the second outer teeth portion 54, the number of teeth as well as the spherical shape of the top surface and the spherical surface of the bottom surface are formed symmetrically in the axial direction (lateral direction in FIG. 1). Also, the first end 53 and the second end 55 are shaped symmetrically in the axial direction (lateral direction in FIG. 1). Therefore, the number of teeth of both inner tooth portions 56 and 57 meshing with both outer tooth portions 52 and 54 are also formed in the same number.

### [Detailed configuration of the wheel structure]

FIG. 2 shows a configuration of the in-wheel motor unit for a vehicle in which a drive unit body A, a displacement absorbing mechanism B, and a wheel structure C are separated or divided from each other. FIG. 3 is an enlarged sectional view showing enlargement of the displacement absorption mechanism that represents the essential constituent. Below, with reference to FIGS. 1 to 3, a detailed description is given of the structure of the displacement absorption mechanism B.

The wheel structure C is configured to include a wheel hub shaft 70, a hub bearing 71, an axle case 72, a brake disk 73, and a tire wheel 110.

The wheel hub shaft 70 is a rotating member connected to the drive output shaft 10 via the gear coupling shaft 50 and functions as an inner race of the hub bearing 71. The wheel hub shaft 70 is supported by the hub bearing 71 at the end of the cylindrical body 700 in the side of the drive unit body A. Further, on a vehicle exterior side than the position for supporting the hub bearing 71, a hub-side flange part 70a extends from the outer periphery of the cylindrical body 700 at its middle portion in the axial direction.

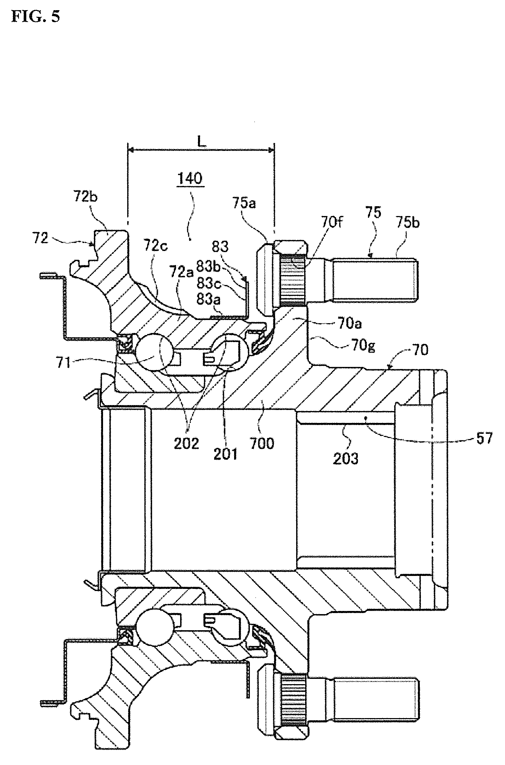

As shown enlarged in FIG. 5, a bolt insertion hole 70f penetrates in the hub-side flange part 70a along the axial direction. A wheel bolt 75 is pre-fixed in the bolt insertion hole 70f with its shaft portion 75b protruded in the vehicle exterior side to secure the brake disc 73 and tire wheel 110 shown in FIG. 1 jointly by a wheel nut (not shown). Further, an end cap sealing member 76 that contacts a second end 55 of the gear coupling shaft 50 is fixed to the end position by a spring pin 77. Note that a tire (not shown) is mounted to the peripheral position of the tire-wheel 110,.

The hub bearing 71 is intended for supporting the wheel hub shaft 70 relative to the axle case 72 and is constituted by double rows of balls to be arranged to have a contact angle with a back-to-back alignment. This hub bearing 71 is structured by constructing the wheel hub shaft 70 as an inner race while constructing the axle case 72 as an outer race. Thus, a surface hardening portions 201,202 which have been subjected to surface hardening treatment by carburizing hardening or shot peening or the like are formed on the ball contact surfaces of the wheel hub shaft 70 and the axle case 72. Note that grease is sealed for lubrication in the hub bearing 71.

The axle case represents a case member which is fixed by a bolt 78 jointly with the unit case 1 to the output shaft cover 4 and functions as an outer race to the hub bearing 71. Further, a case- side flange part 72b of the axle case 72 represents a brake part for a wheel cylinder 79 to be fixed, and is integrally extended with a brake caliper 81 for supporting a pair of brake shoes 80,80.

Further, on the case-side flange part 72b of the axle case 72, a splash guard 82 is fixed to cover the brake disk 73 in addition to preventing intrusion of muddy water into the hub bearing 71. Furthermore, on the cylindrical portion 72a of the axle case 72, a mud guard 83 is fixed as shown in Fig. 5 to thereby prevent muddy water from intruding in the hub bearing 71 as well as in the sealing member 84 for sealing thereof.

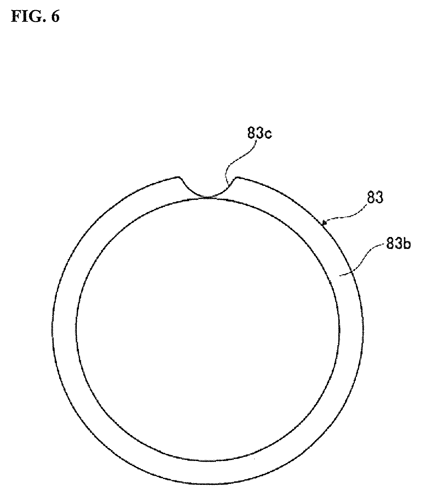

The mud guard 83 is formed into an L-sectional shape having a cylindrical base portion 83a which is fixed to the cylindrical portion 72a and an annular shielding plate 83b that extends radially outward from the end of the base portion 83a.
Further, as shown in FIG. 6, at the one place in the circumferential direction of the shielding plate 83b, a cutout portion 83c is formed to have a circular arc shape in an inner diameter direction from the outer peripheral edge.

The axle case 72, as shown in FIG. 1, is fixed to the output shaft side cover 4 to thereby form a closed space 90 having a liquid sealing property between the drive unit body A and the hub bearing 71. An ABS sensor 91 is placed in the closed space 90 for detecting a wheel speed.
The ABS sensor 91 is provided such that a sensing part 91b is disposed in the upper position of the axle case 72 and penetrates through the closed space 90. A sensed part 91b is press-fitted to the wheel hub shaft 70. Note that a breather 90 is connected to the closed space 90 for communication with ambient air (see FIG. 3).

### [Detailed configuration of the assembly structure of the gear coupling shaft]

Now, a description is given of the configuration of the assembly of the gear coupling shaft 50. The wheel hub shaft 70 is provided with, as shown in FIG. 3, in the state of being supported by hub bearing 71 relative to the unit case 1, an opening 70b in an axially end (right end in the figure) opposite to the drive unit body A. The opening 70b is formed in a larger diameter than a general portion 70c for storing the gear coupling shaft 50 in the cylindrical wheel hub shaft 70 so that the inner diameter is provided for inserting the gear coupling shaft 50. Also, a step 70d is formed between the opening portion 70b and the general portion 70c.

Furthermore, the opening 70b is closed by the end cap seal member 76 described above. The end cap seal member 76 is formed in a disc shape and made of a metal or a resin. Further, in the outer peripheral portion, as shown in FIG. 3, a flange 76f extending in the axial direction are formed. A seal member 76a is provided on the outer periphery of the flange 76f for sealing the closed space 90.

The end cap sealing member 76, in a state of being abutted against the step portion 70d,is retained and prevented from dropping off the opening portion 70b by a spring pin 77 as detachable member. has been made and the retaining of the opening 70b by the spring pin 77 of the detachable member.
More specifically, a pair of insertion holes 70e, 70e is opened in the wheel hub shaft 70 to penetrate in a direction perpendicular to the axis.

Further, a flange portion 76f of the end cap seal member 76 is formed with, seen in the radial direction, U-shaped cut-out portions 76b, 76b at the upper and lower position radially coaxially with the insertion holes 70e, 70e for inserting spring pins.

Further, as shown in FIG. 1, the insertion holes 70e, 70e are covered by an inner periphery of an attachment hole 111 of the tire wheel 110 which is mounted to the wheel hub shaft 70. Thus, in a state of mounting the tire wheel 110, the spring pin is prevented from being drop off by the tire wheel. In addition, the attachment hole 11 is closed by a cap 112 so that entry of muddy water into the end cap seal member 76 and the spring pin 77 is restricted.

### [Detailed configuration of the periphery of the axle case]

As shown enlarged in FIG. 5, the axle case 72 is provided with a cylindrical portion 72a for supporting the hub bearing 71 and a case- side flange part 72b which extends in the outer diameter direction in a disc shape from the cylindrical portion 72a at the end of the drive unit body A and which is fixed to the output shaft side cover 4.

Note that a space 140 is provided between the case-side flange part 72b and the hub-side flange part 70a of the wheel hub shaft 70. The space 140 serves as a space for the mounting and demounting work of the wheel bolt 75 to and from the hub-side flange part 70a.

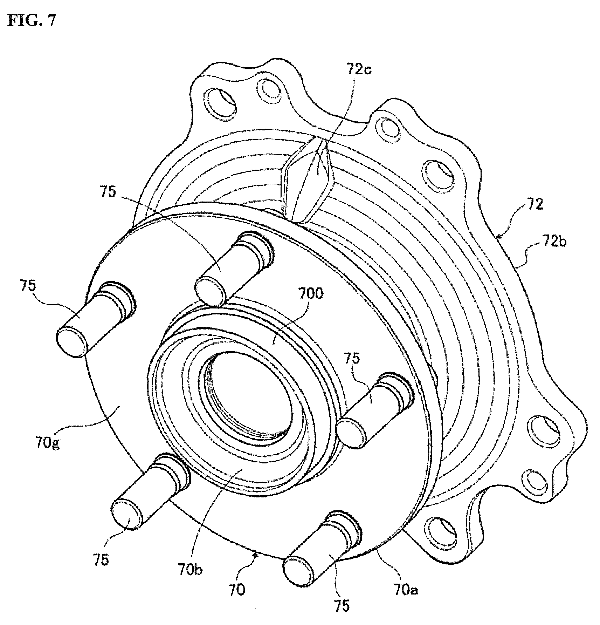

Thus, the axle case 72 if formed with a work groove 72c at the corner portion between the cylindrical portion 72a and the case-side flange part 72b. As shown in a perspective view in FIG. 7, the work groove 72c is provided at one place in the circumferential direction of the cylindrical portion 72a of the axle case 72. Further, the operation groove 72c is formed. The operation groove 72c, as shown in the perspective view of FIG. 7, is provided at one place in the circumferential direction in the cylindrical part 72a of the axle case 72. Moreover, this work groove 72c is, as viewed from the axial direction, formed to extend radially (in the up and down direction in the figure) in the center of the lateral direction so as to be symmetrical when viewed from the axial direction.

The operation groove 72c is intended to prevent mounting and dismounting of the wheel bolt 75 from interference between a head portion 75a of the wheel bolt 75 and the axle case 72 when attaching and detaching the wheel bolt 75 in the bolt insertion hole 70f.

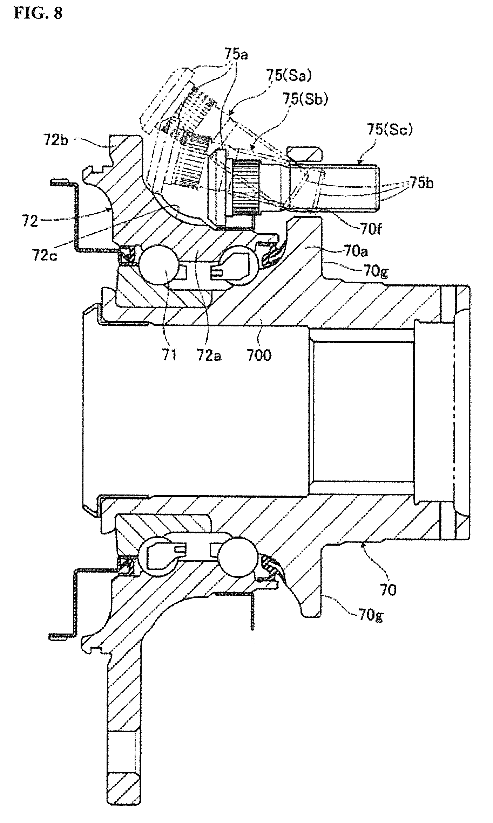

In the first embodiment, the axial dimension L (see FIG. 5) of the space 140 between the case-side flange part 72b and the hub-side flange part 70a is shorter than the axial length of the wheel bolt 75 so as to be too narrow for the wheel bolt to be attached to or detached from the bolt insertion hole 70f.
That is, with the axial dimension L, in a state (Sa) in FIG. 8, in which the tip of the shaft portion 75b shown is inserted in the entrance of the bolt hole 70f, when an attempt is made to further insert the shaft portion 75b as shown by (Sb), then the head portion 75a comes to interfere with the axle case 72. Conversely, in a state (Sc) in which the wheel bolt 75 is inserted in the bolt insertion hole 70f, an attempt is made to withdraw the bolt 75 as shown by (Sb), the head portion 75a will interfere with the axle case 72 so that the displacement will be prevented.

Therefore, the axle case 72 is formed with the operation groove 72c, and the depth of the operation groove 72c is formed with a depth such that the head portion 75a would not interfere with the axle case 72 and separated from the hub-side flange part 70a.

Furthermore, as shown in FIG. 7, the operation groove 72 is formed at only one location so as to minimize the stiffness reduction by forming the operation groove 72c.

Moreover, since the operation groove 72c, when providing at one place in the circumferential direction of the axle case 72, as viewed from the axial direction, is located at the one upper. laterally symmetrical position, when attaching to a vehicle body (not shown), the axle case may be commonly used for left and right wheels.

Returning to FIG. 1, in the first embodiment, as described above, the hub-side flange part 70a erects in the axially middle portion of the wheel hub shaft 70. Thus, the outer face of the hub-side flange part 70a (right side in the figure) provides for a wheel mounting surface 70g. In the first embodiment, a brake disc 73 is sandwiched between the wheel mounting surface 70g and the tire-wheel 110.
Further, with respect to this wheel mounting surface 70g, the second outer tooth portion 54 for engagement with the wheel hub shaft 70 of the gear coupling shaft 50 forming the displacement absorption mechanism B is arranged in the axial direction on the exterior side of the vehicle, i.e., axially in the vehicle exterior side (right side in the figure).

In addition, the hub bearing 71 is disposed in the drive unit body A side with respect to the hub-side flange part 70a forming the wheel mounting surface 70g. Further, the second inner tooth portion 57 is provided in a position away to the outside of the vehicle direction with respect to the portion that supports the hub bearing 71. Further, the second inner tooth portion 57 is provided on the surface layer thereof with a surface hardening portion 203 through carburizing quenching, shot peening or the like. Furthermore, the first inner tooth portion 56 of the drive output shaft 10, both outer tooth portions 52, 54 of the gear coupling shaft 50 are formed with a similar surface hardening portion (not shown) in a similar manner.

Note that, in the present first embodiment, the hub bearing 71 is disposed somewhere in the middle position between the output shaft side drive transmission fitting portion 58 and the hub shaft side drive transmission fitting portion 59.

Now, a description is given of operations. The operation of the vehicle in-wheel motor unit in the first embodiment is described separately in the "displacement absorption operation by the displacement absorption mechanism", "detaching operation of the wheel bolt".

### [Displacement absorption operation by the displacement absorption mechanism]

For example, when the race surface wear of the hub bearing 71 progresses, the wheel hub shaft 70 supported on the hub bearing tends to be displaced or inclined. Displacement / inclination of the wheel hub shaft 70 will be transmitted to the gear train GT and the motor-generator MG in a driving unit body A to thereby cause;
(1) abnormal noise and vibration: gear noise due to uneven or partial gear contact,
(2) gear life reduction: topical stress/surface pressure due to uneven or partial gear contact,
(3) friction increase: increase in loss due to the backlash change between the gear tooth surfaces, and
(4) motor performance deterioration: performance decrease and torque fluctuations due to air gap change.

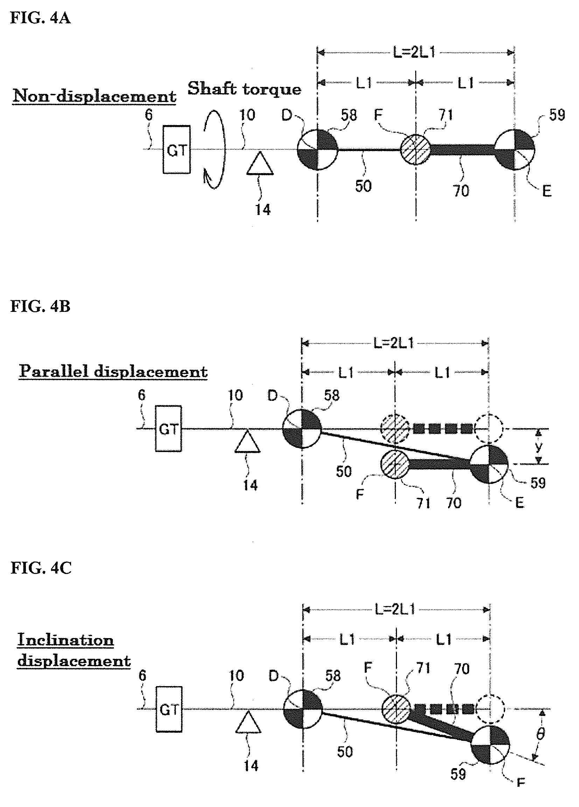

Therefore, the displacement absorption mechanism is required to prevent/suppress the effects on the gear meshing portions or the motor-generator MG by preventing / inhibiting to transmit the displacement / inclination of the wheel hub shaft 70 to the gear train GT and the motor-generator MG. Below, with reference to FIGS. 4A to 4D, a description is given of the displacement absorption operation of the displacement absorption mechanism B.

When the wheel hub shaft 70 is displace in parallel by "y" in a direction perpendicular to the axis from the non-displacement state of Fig. 4A to FIG.4B, the parallel displacement may be absorbed through an inclination action of two universal joints of the output shaft side drive transmission fitting portion 58 and the hub side drive transmission fitting portion 59. Thus, the parallel displacement of the wheel hub shaft 70 is free from affecting the drive output shaft 10 to displace.

Further, when the wheel hub shaft 70, as shown in FIG. 4C undergoes the inclination displacement (swinging displacement) by θ about a displacement center point F from the non-displacement state in FIG. 4A to the state in FIG. 4C, the inclination displacement may be absorbed through an action of two universal joints of the output shaft side drive transmission fitting portion 58 and the hub side drive transmission fitting portion 59 via an inclination of the gear coupling shaft 50 shown in the figure. Thus, the inclination displacement of the wheel hub shaft 70 is free from affecting the drive output shaft 10 to displace.

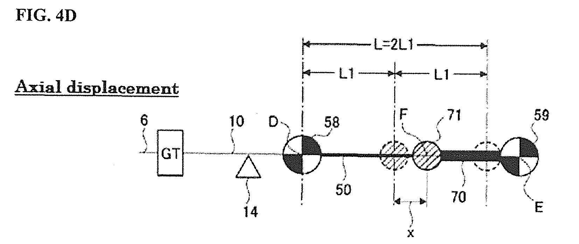

Furthermore, when the wheel hub shaft 70, as shown in FIG. 4D undergoes an axial displacement by "x" from the non-displacement state in FIG. 4A, the axial displacement may be absorbed through a sliding action of at least one of the universal joints of the output shaft side drive transmission fitting portion 58 and the hub side drive transmission fitting portion 59. Thus, the axial displacement of the wheel hub shaft 70 is free from affecting the drive output shaft 10 to displace.

As described above, by configuring such that the displacement center point F of the displacement absorption mechanism B (center position of the two rows balls of the hub bearing 71) is placed in a position between the inclination center points D, E, despite the parallel displacement, inclination displacement, and the axial displacement of the wheel hub shaft 70 being generated, these displacements may be reliably absorbed by the output shaft side drive transmission fitting portion 58 and the hub shaft side drive transmission fitting portion 59. In other words, the displacement of the wheel hub shaft 70 is never in a position to affect the drive output shaft 100 to displace to the corresponding direction.

Therefore, according to the in-wheel motor unit for a vehicle, the displacement of the wheel hub shaft 70 is prevented from being transmitted to the gear train GT and the motor-generator MG from the drive output shaft 10 thanks to the displacement absorbing mechanism B. Consequently, the displacement absorption mechanism would not cause any of the above-mentioned problems (1) to (4).

### Now, a description is given of effects.

According to the in-wheel motor unit for a vehicle in the first embodiment, it is possible to obtain the following effects.
(a) An in-wheel motor unit for a vehicle in the first embodiment, in which a drive output shaft 10 of a drive unit body A and a wheel hub shaft 70 supported by a hub bearing 71 with respect to an axle case 72 as case member of the drive unit body A are linked or connected via a displacement absorption mechanism B, the displacement absorption mechanism B comprising:
   an output shaft side drive transmission fitting portion 58 which allows a first inner tooth portion 56 of the drive output shaft 10 to mesh with a first outer tooth portion 52 of a gear coupling shaft 50, and
   a hub shaft side drive transmission fitting portion 59 which allows a second inner tooth portion 57 of the wheel hub shaft 70 to mesh with a second outer tooth portion 54 of the gear coupling shaft 50, wherein the second outer tooth portion 54 of the gear coupling shaft 50 of the displacement absorption mechanism B is arranged axially in the vehicle exterior side with respect to a wheel mounting surface 70g on which a tire wheel 110 is mounted to the wheel hub.

   Thus, in the first embodiment, since the second outer tooth portion 54 of the gear coupling shaft 50 of the displacement absorption mechanism B is arranged or disposed in the vehicle exterior side in the axial direction with respect to the wheel mounting surface 70g, the drive unit body A may be disposed on the vehicle exterior side. Thus, the overall axial dimension of the unit may be kept small while achieving an excellent vehicle mountability.
   Further, by disposing the second outer tooth portion 54 of the gear coupling shaft 50 of the displacement absorption mechanism B in the axially outside direction of the vehicle, it is possible to ensure a long axial span of the displacement absorption mechanism B . Therefore, as compared with the case with a short axial span, the displacement absorbing performance described in (1) to (4) may be obtained more reliably.
   Thus, in the in-wheel motor unit for a vehicle in the first embodiment, both the vehicle mountability and the displacement absorption performance may be secured.
(b) According to the in-wheel motor unit for a vehicle in the first embodiment, the hub bearing 71 is arranged, with respect to the wheel mounting surface 70g, in the axial direction at the position of the drive unit body A side, and a surface layer of the second inner tooth portion 57 of the wheel hub shaft 70 is formed with a surface hardening portion 203.
   The wheel hub shaft 70 is formed with a surface hardening portions such as through carburizing quenching at the surface layer of the second inner tooth portion 57 and a raceway surface 201 of the hub bearing 71. In the first embodiment, a sufficient distance is secured between the raceway surface of the hub bearing 71 and second inner tooth portion 57 meshing with the second outer tooth portion 54 of the gear coupling shaft 50. Therefore, when one of the second inner teeth 57 and the hub bearing 71 is subjected to the surface hardening process, as compared to an arrangement in which the wheel mounting surface 70g and hub bearing 71 are arranged in the vehicle outside or exterior position, it is possible to prevent the other part from receiving heat effect and reduction of hardening due to bad heat effect (burn off).
(c) According to the in-wheel motor unit for a vehicle in the first embodiment, the displacement absorption mechanism is configured such that the first outer tooth portion 52 and the second outer tooth portion 54 of the gear coupling shaft 50 are formed in a spherical shape at the top surface and the bottom surface of the respective outer tooth, and the tooth surface is formed in a crowning shape.
   Thus, when absorbing the displacement of (1) to (4) described above, it is possible to suppress a resistance at the gear meshing portions while ensuring a high displacement absorption performance. Further, it is possible to suppress generation of wear in the gear meshing portions.
   That is, in addition to securing an axial span and improving the displacement absorption performance described in (a) above, based on profile or shape of both outer tooth portion 52, 54, it is possible to further improve the displacement absorption performance.
(d) According to the in-wheel motor unit for a vehicle in the first embodiment, the displacement absorption mechanism is configured such that, when placing the second outer tooth portion 54 of the gear coupling shaft 50 of the displacement absorption mechanism B in the axial direction in the vehicle exterior side with respect to the wheel mounting surface 70g of the hub-side flange part 70a, the hub bearing 71 is disposed substantially in an intermediate position between the output shaft side drive transmission fitting portion 58 and the hub shaft side drive transmission fitting portion 59, in particular in a substantially central position.
   Therefore, the input to the wheel hub shaft 70 due to driving transmission of the output shaft side drive transmission fitting portion 58 and the hub shaft side drive transmission fitting portion 59 is transmitted without biased to one side. Therefore, the displacement due to this biased input transmission is less likely to occur.
(e) According to the in-wheel motor unit for a vehicle in the first embodiment, an operation groove 72c is formed in part of the axle case 72, which has a depth for separating the head portion 75a of the wheel bolt 75 from the bolt insertion hole 70f until the shaft portion 75b is completely withdrawn from the bolt insertion hole 70f.

Thus, compared to a structure without the operation groove 72c, it is possible to facilitate mounting or dismounting the wheel bolt 75 while reducing the axial dimension of the space 140 between the hub- side flange part 70a and the case- side flange part 72b.

Thus, it is possible to shorten the axial size of the in-wheel motor unit for a vehicle. Therefore, while obtaining remarkably the effect of shortening the axial dimension of the drive unit body A as described above at (a), it is possible to ensure adequate maintenance.

The present invention has been described above on the basis of the vehicle in-wheel motor unit in the first embodiment. However, the specific configuration is not limited to the first embodiment. Without departing from the gist of the invention pertaining to each claim in CLAIMS, design changes and additions are acceptable.

In the embodiment, when placing the second outer tooth portion of the gear coupling shaft of the displacement absorption mechanism, the hub bearing is arranged axially between the output shaft side drive transmission fitting portion and the hub shaft side drive transmission fitting portion and in a substantially central position. However, as long as the hub shaft side drive transmission fitting portion (second outer tooth portion) is disposed in the vehicle exterior side with respect to the wheel mounting surface, the positions of the hub bearing, the output shaft side drive transmission fitting portion, and the hub shaft side drive transmission fitting portion are not limited thereto.

Further, in the embodiment, the axle case is exemplified as a case member for supporting the wheel hub shaft through the hub bearing. However, as long as the case member is included in the unit case member, the only case member is not limited to the axle case.

In the first embodiment, an example is shown in which the vehicle in-wheel motor unit according to the present invention is applied to left and right rear wheels of an electric vehicle. However, the vehicle in-wheel motor unit according to the present invention is applicable to the left and right front wheels, or all wheels of the electric vehicle.

### CROSS-REFERENCE TO RELATED APPLICATIONS

The present application claims priority based on Japanese Patent Application No. 2013-082666, file in Japan Patent Office on April 11, 2013, the entire disclosure of which is hereby incorporated by reference in its entirety.

## Claims

1. An in-wheel motor unit for a vehicle in which a drive output shaft of a drive unit body and a wheel hub shaft supported by a hub bearing with respect to a case member of the drive unit body are connected via a displacement absorption mechanism, the displacement absorption mechanism comprising:
an output shaft side drive transmission fitting portion which allows a first inner tooth portion of the drive output shaft to mesh with a first outer tooth portion of a gear coupling shaft, and
a hub shaft side drive transmission fitting portion which allows a second inner tooth portion of the wheel hub shaft to mesh with a second outer tooth portion of the gear coupling shaft, wherein the second outer tooth portion of the gear coupling shaft of the displacement absorption mechanism is arranged axially in the vehicle exterior side with respect to a wheel mounting surface on which a wheel is mounted to the wheel hub.

2. The in-wheel motor unit for a vehicle according to claim 1, wherein the hub bearing is arranged, with respect to the wheel mounting surface, in the axial direction at the position of the drive unit body side, and a surface layer of the second inner tooth portion of the wheel hub shaft is formed with a surface hardening portion.

3. The in-wheel motor unit for a vehicle according to either claim 1 or 2, wherein the displacement absorption mechanism is configured such that the first outer tooth portion and the second outer tooth portion of the gear coupling shaft are formed in a spherical shape at the top surface and the bottom surface of the respective outer tooth, and the tooth surface is formed in a crowning shape.
